# EUROPÄISCHE PATENTSCHRIFT

(11) **EP 2 529 521 B1**
(45) Veröffentlichungstag und Bekanntmachung des Hinweises auf die Patenterteilung: **09.10.2013**
(21) Anmeldenummer: 10708889.0
(22) Anmeldetag: 29.01.2010
(51) Int. Cl.: H04L 25/02, H02J 13/00

(54) **SENDESTUFE IN EINEM BUSKNOTEN EINES BUSNETZES ZUM ERZEUGEN EINES EINEM SENDESIGNAL ENTSPRECHENDEN BITSIGNALS UND VERFAHREN ZUM ERZEUGEN EINES BITSIGNALS AUS EINEM SENDESIGNAL**
TRANSMITTER STAGE IN A NODE OF A BUS NETWORK FOR GENERATING A BIT SIGNAL CORRESPONDING TO A TRANSMIT SIGNAL AND CORRESPONDING METHOD
ETAGE D'EMISSION DANS UN NOEUD D'UN RESEAU DE BUS POUR GENERER UN SIGNAL DE BIT CORRESPONDANT A UN SIGNAL A TRANSMETTRE ET PROCEDE CORRESPONDANT

(43) Veröffentlichungstag der Anmeldung: 05.12.2012
(73) Patentinhaber: GIRA GIERSIEPEN GmbH & Co. KG, 42477 Radevormwald (DE); Tapko Technologies GmbH, 93059 Regensburg (DE)
(72) Erfinder: TOMIC, Petar, 93049 Regensburg (DE); ADLER, Klaus, 93173 Wenzenbach (DE); SEIFERT, Roland, 59071 Hamm (DE); KEMMANN, Harald, 42555 Velbert (DE); LASKIWITZ, Ingo, 42929 Wermelskirchen (DE)
(74) Vertreter: Tönhardt, Marion
(86) Internationale Anmeldenummer: PCT/DE2010/000094
(87) Internationale Veröffentlichungsnummer: WO 2011/091774

(56) Entgegenhaltungen:
- EP-B1- 0 909 497
- WO-A1-96/31012
- WO-A1-98/04027

## Beschreibung

Die Erfindung betrifft eine Sendestufe in einem Busknoten eines Busnetzes, insbesondere in einem Busknoten eines EIB-Netzes, der an eine Buslinie gekoppelt ist, zum Erzeugen eines einem Sendesignal entsprechenden Bitsignals, sowie ein Verfahren zum Erzeugen eines Bitsignals aus einem Sendesignal, wobei das Sendesignal aus einer Folge von Sendeimpulsen besteht.

Busknoten sollen einerseits eine Kombination zwischen den in ihm enthaltenden Steuereinheiten, zumeist Mikroprozessoren, gewährleisten, andererseits auch die Spannungsversorgung dieser Steuereinheit und überdies von angeschlossenen Applikationsschaltungen, wie Relais, Sensoren, Taster, Anzeigen und dergleichen über den Bus sicherstellen. Ein Busknoten in diesem Sinne enthält daher einen Sender, einen Empfänger und eine Spannungsversorgung für die interne Schaltung und gegebenenfalls zusätzlich für die Applikationsschaltungen.

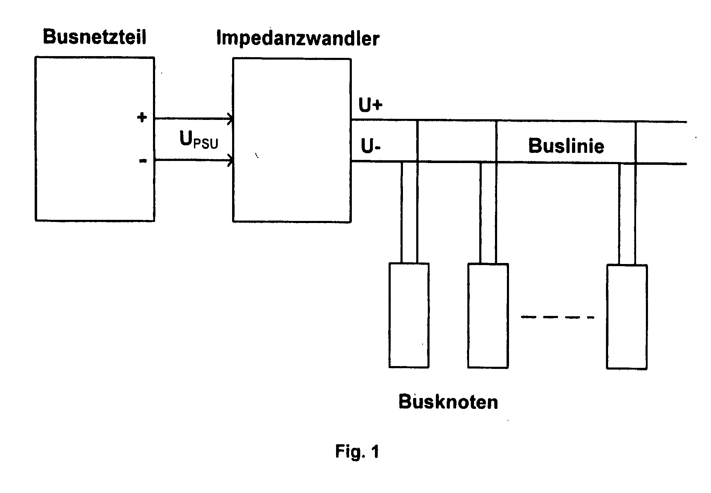

Figur 1 zeigt die Konfiguration eines Busses mit mehreren Busknoten. Zur Spannungsversorgung sind ein oder mehrere Netzteile enthalten, deren Ausgangsimpedanz allerdings erhöht werden muss, um zu verhindern, dass die Übertragungsfrequenzen der Buskommunikation durch die Netzteile im schlimmsten Falle bis zur Annullierung bedämpft werden. Hierzu dienen zwischengeschaltete Impedanzwandler, die vorzugsweise als Drosselmodule ausgebildet sind.

Die Anforderungen an eine Sendestufe, wenn sie in einem EIB-Netz eingesetzt wird, sind im Konnex Handbuch, Version 2.0, festgelegt. Anhand dieser Anforderungen erfolgt eine Zertifikation der fertigen Busgeräte.

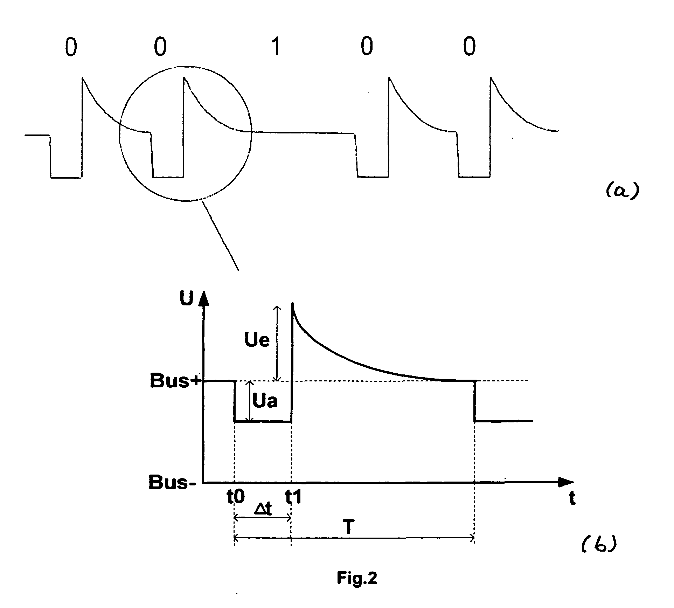

In Figur 2 ist im Teilbild (a) eine Bitfolge aus einem EIB-Beispieltelegramm dargestellt, das entsprechend einer Folge von Impulsen eines Sendesignals generiert wird, im Teilbild (b) die Einzelheiten eines einzelnen Bitimpulses. Bus+ ist die nominale Busspannung, Bus- stellt für die weiteren Betrachtungen das gemeinsame Potential, d. h. das Massepotential, dar. Das EIB-Signal eines einzelnen Sendeimpulses ist durch einen zeitlich begrenzten und in der Dauer mit dem Sendeimpuls synchronisierten Spannungseinbruch Ua, im Folgenden als Aktivimpuls bezeichnet, ab der nominalen Busspannung Bus+ definiert. Zum Zwecke der Energieminimierung beim Senden einer Nachricht folgt anschließend eine definierte Spannungsüberhöhung Ue über die nominale Busspannung Bus+ hinaus, die den sogenannten Ausgleichsimpuls einleitet. Im Zusammenspiel mit einem Drosselmodul als Impedanzwandler der Busnetzteile, das dabei gleichzeitig einen Energiespeicher darstellt, erfolgt nach jedem aktiven Signal (Sendeimpuls) eine Energierückführung auf die Busleitung. Danach klingt der Ausgleichsimpuls als exponentielle Funktion ab, bis nach Ablauf der Bitperiode T das nächste Bit eines Telegramms erscheint. Dann muss der Ausgleichsimpuls vollständig abgeklungen sein, damit definierte Spannungsbedingungen für das nächste Bit sichergestellt sind.

Busknoten in ihrer Funktion als Sender generieren diese Signale entsprechend. Idealerweise sollte dieselbe Energiemenge, die ein Sendeimpuls dem Bus mit dem Aktivimpuls entzieht, während des Ausgleichsimpulses wieder eingespeist werden.

Um ein Bitsignal zu erzeugen, das den oben beschriebenen Anforderungen genügt, werden im Regelfall zwei Schaltungsteile benötigt, nämliche eine Schaltung zum Erzeugen des Aktivimpulses und eine Schaltung zum Erzeugen des sich an den Aktivimpuls anschließenden Ausgleichsimpulses, obwohl es auch Lösungen gibt, die auf die letztere Schaltung verzichten. Dazu ist mindestens eine Steuerschaltung vorgesehen, welche das Sendesignal zumindest an die Schaltung zum Erzeugen des Aktivimpulses ausgibt.

Eine derartige Sendestufe ist in der DE 10 2006 011 595 B4 beschrieben. Dort geschieht die Nachbildung eines Aktivimpulses im Einklang mit der jeweils aktuell anliegenden Busgleichspannung, wobei die Amplitude des Aktivimpulses durch die Amplitude einer in der Sendestufe erzeugten Sendesignalspannung vorgegeben ist. Zur Rückgewinnung der Energie wird der durch den Aktivimpuls hervorgerufene Energieverlust in einem kapazitiven Speicherelement gespeichert. Hierdurch wird an dem Speicherelement eine Spannung aufgebaut, welche höher ist als die Busgleichspannung. Es sind in der Schaltung zum Erzeugen des Aktivimpulses jeweils eine Steuerschaltung vorgesehen, wobei die Steuerschaltungen untereinander kommunizieren, um das Sendesignal weiterzugeben.

Die EP 0 909 497 B 1 offenbart einen Busankoppler mit amplitudengesteuerter Sendeschaltung, bei dem der Amplitudenhub des Aktivimpulses mittels der Spannung am Knoten einer Spannungsteilerschaltung geregelt wird.

Die WO 96/31012 A1 offenbart eine Sendestufe, bei der eine Spannung +V verwendet wird, um den Amplitudenhub des Aktivimpulses unabhängig vom Gleichspannungsanteil des Bussignals zu regeln.

Die WO 98/04027 A1 beschreibt eine Sendestufe nach dem Oberbegriff des Anspruchs 1, bei der eine Schaltung zum Erzeugen des Aktivimpulses und eine Schaltung zum Erzeugen des Ausgleichsimpulses vorgesehen sind, weiterhin eine Steuerschaltung, welche das Sendesignal zumindest an die Schaltung zum Erzeugen des Aktivimpulses ausgibt. Dabei wird eine kleine Kapazität in einer Miller-Schaltung, die aus dieser kleinen Kapazität sowie aus einem Transistor und einem Ansteuerwiderstand besteht, und mit zwei Stromverstärkerschaltungen in eine ausreichend große Kapazität transformiert, so dass in Kurzzeitbetrachtung bezüglich der Zeitkonstanten einer niederohmige Verbindung zum Busleiter zur Verfügung gestellt wird. Diese weist einen festen Spannungsabfall auf, der sich aus der Busspannung, minus einer Festspannungsquelle und minus einer Basis-Emitter-Spannung des Transistors der letzten Stromverstärkerschaltung ergibt. Da der Emitter mit dem Sendetransistor für die Dauer des Aktivpulses gegen Masse gezogen wird, steht auf dem Bus unabhängig von der Busspannung ein Aktivimpuls, der immer gleich große Amplituden aufweist.

Die bekannte Sendestufe verwendet insbesondere in der Schaltung zum Erzeugen des Aktivimpulses zahlreiche aktive Bauelemente, die zu den Kosten der Sendestufe nicht unerheblich beitragen.

Es ist die Aufgabe der Erfindung, die Sendestufe der genannten Gattung schaltungstechnisch weiter zu vereinfachen und damit kostengünstiger zu halten, indem auf aktive elektronische Elemente weitgehend verzichtet und auf passive elektronische Elemente, die im Regelfall deutlich preiswerter sind, zurückgegriffen wird.

Dabei ist immer durch optimierte Signalformung dafür zu sorgen, dass die entzogene Energie weitest möglich wieder auf den Bus zurückgeführt werden kann.

Diese Aufgabe wird durch eine Sendestufe nach Anspruch 1 gelöst. Vorteilhafte Ausgestaltungen sind Gegenstand der Unteransprüche. Eine Verwendung der erfindungsgemäßen Sendestufe ist in Anspruch 6 angegeben.

Die Erfindung vermeidet die Miller-Schaltung des Standes der Technik mit nachgeschalteteten Stromverstärkerschaltungen, die stark transistorlastig sind. Dieser gesamte Komplex wird durch eine Schaltung mit passiven Bauelementen ersetzt, so dass die aktiven Elemente lediglich in der Steuerschaltung bzw. im Sendetransistor vorhanden sind. Die Verwendung nur passiver Elemente bedingt einen Kompromiss bei der Abstimmung der Kapazität des Kondensators C1 und der Widerstände R1, R2 und R3, wie hiernach noch erläutert ist.

Erfindungsgemäß ist bei einer Sendestufe die Pulstiefe des Aktivimpulses durch eine vorgegebene Referenzspannung festgelegt, die von der Größe des Gleichspannungsanteils des Bitsignals bzw. Bussignals unabhängig ist. Dadurch gelingt es, sozusagen vorab Kenntnis darüber zu erlangen, wie viel Energie der Aktivimpuls abziehen wird, so dass das Abklingverhalten des Ausgleichsimpulses durch die angepasste Dimensionierung eines Zeitgliedes (z. B. einer Differenzierschaltung) definiert werden kann. Es wird die Pulstiefe des Aktivimpulses durch negative Rückkopplung des Wechselspannungsanteils des Bitsignals konstant gehalten, was weiterhin dazu beiträgt, die im Aktivpuls abgezogene Energie genau bestimmen zu können. Weiter ist erfindungsgemäß vorgesehen, dass ein Kondensator zwischen den spannungstragenden Teil der Buslinie und einen Spannungsknoten gelegt ist, wobei der Spannungsknoten den Spannungsabgriff einer durch die Referenzspannung gespeisten Spannungsteilerschaltung bildet, der über einen Widerstand an die Basis eines Transistors gelegt ist, welcher Teil einer Ansteuerschaltung eines Sendetransistors ist, wobei die Widerstände der Spannungsteilerschaltung die Pulstiefe festlegen und wobei die Kapazität des Kondensators und die Größen der Widerstände so abgestimmt sind, dass deren Zeitkonstante die Übertragung des Sendesignals während der Dauer des Aktivpulses gewährleistet.

Dabei kann die Referenzspannung eine von einer Spannungsversorgung des Busknotens bereitgestellte Versorgungsspannung sein oder aber auch eine Zwischenspannung, die in einer Spannungsversorgung des Busknotens erzeugt wird.

Noch weiter vorteilhaft ist vorgesehen, dass, wenn eine Schaltung zum Erzeugen des Ausgleichsimpulses vorhanden ist, diese mindestens zwei Energiespeicher aufweist, welche zu Beginn des Sendeimpulses parallel geschaltet sind und sich während der Dauer des Sendeimpulses auf die momentan vorliegende Busspannung aufladen und am Ende des Sendeimpulses in Serie geschaltet werden, wobei die Gesamtspannung über den in Serie geschalteten Energiespeicher auf den Bus aufzuschalten ist. Damit wird zuverlässig erreicht, dass eine Spannung vorhanden ist, die direkt oder indirekt, d. h. aufbereitet, als die erforderliche Spannungsüberhöhung zur Verfügung steht, deren Abklingen einfach zu optimieren ist.

Bevorzugt ist eine einzige Steuerschaltung vorgesehen, welche die Schaltung zum Erzeugen des Aktivimpulses und die Schaltung zum Erzeugen des Ausgleichsimpulses ansteuert. Dies vereinfacht den tatsächlichen Schaltungsaufbau und wird möglich, weil der Ausgleichsimpuls unmittelbar mit dem Sendeimpuls synchronisiert wird.

Schließlich beschreibt die Erfindung die Verwendung einer Sendestufe nach einem der Ansprüche 1 bis 5 in einer anwendungsspezifischen integrierten Schaltung (ASIC - *Application Specific Integrated Circuit*), die dann auch weitere Schaltungsteile umfassen könnte, beispielsweise Empfänger, Spannungsversorgung und dergleichen.

Im Folgenden soll die Erfindung anhand der beigefügten Zeichnung näher erläutert werden.
- Figur 1: zeigt ein Beispiel für eine Konfiguration eines Busses.
- Figur 2: zeigt im Teilbild (a) eine Bitfolge aus einem EIB-Beispieltelegramm und im Teilbild (b) die Einzelheiten eines Bitimpulses aus der Bitfolge.
- Figur 3: zeigt ein Blockschaubild einer Sendestufe gemäß einem Ausführungsbeispiel der vorliegenden Erfindung.
- Figur 4: zeigt ein Ausführungsbeispiel einer Schaltung zum Erzeugen des Aktivimpulses, die bei einer Sendestufe gemäß der vorliegenden Erfindung einzusetzen ist.
- Figur 5: zeigt eine Schaltung zum Erzeugen des Ausgleichsimpulses, die bei einer Sendestufe gemäß der vorliegenden Erfindung einzusetzen ist.
- Figur 6: zeigt ein Beispiel für eine komplette Sendestufe gemäß der vorliegenden Erfindung mitsamt der Steuerschaltung.

In der nachfolgenden Beschreibung und in den Zeichnungen sind zahlreiche bestimmte Einzelheiten aufgeführt. Es wird jedoch verstanden, dass Ausführungsformen der vorliegenden Erfindung ohne diese bestimmten Einzelheiten in die Praxis umgesetzt werden können. In anderen Fällen sind gut bekannte Schaltungen, Strukturen und Techniken weggelassen, um das Verständnis der Erfindung nicht zu erschweren. Es wird verstanden, dass an den dargestellten Ausführungsformen zahlreiche Modifikationen und Abänderungen vorgenommen werden können, ohne dass man sich vom Umfang der Erfindung entfernt. Die dargestellten Ausführungsbeispiel sollten daher als beschreibend und nicht als beschränkend angesehen werden. Insbesondere ist denkbar, dass, obwohl die Ausführungsbeispiele mit bipolaren Transistoren aufgebaut sind, andere Technologien eingesetzt werden können, so dass die Schaltungen z. B. mit Feldeffekttransistoren realisiert werden könnten.

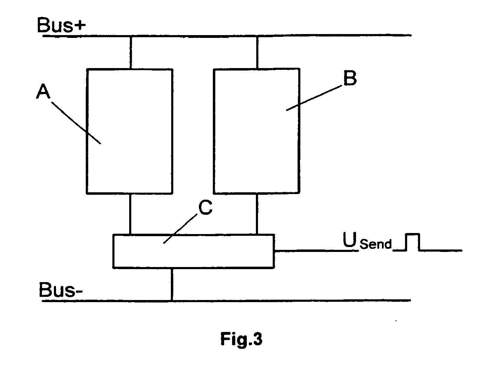

Figur 3 zeigt ein Blockschaubild einer Sendestufe in einem Busknoten gemäß einem Ausführungsbeispiel der vorliegenden Erfindung. Dabei werden eine Schaltung A zum Erzeugen des Aktivimpulses und eine Schaltung B zum Erzeugen des sich an den Aktivimpuls anschließenden Ausgleichsimpulses von einer einzigen Steuerschaltung C angesteuert, die ein Sendesignal, aus Gründen der Einfachheit als einzelner Sendeimpuls U_{send} dargestellt, sowohl an die Schaltung A zum Erzeugen des Aktivimpulses als auch an die Schaltung B zum Erzeugen des Ausgleichsimpulses ausgibt. Die das Signal U_{send} ausgebende Steuereinheit ist in der Zeichnungsfigur nicht dargestellt. Alternativ kann die Sendestufe auch ohne die Schaltung B zum Erzeugen des Ausgleichsimpulses realisiert werden.

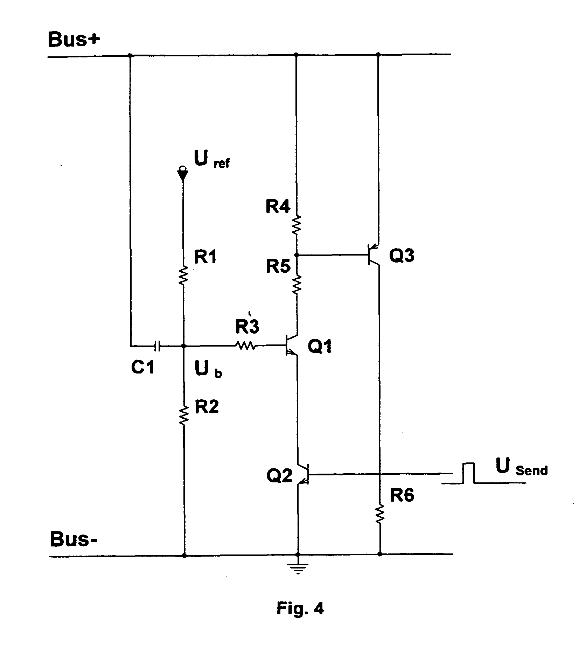

Figur 4 zeigt ein Beispiel einer Schaltung zum Erzeugen des Aktivimpulses für eine Sendestufe gemäß der vorliegenden Erfindung.

Der Transistor Q3 stellt einen Sendetransistor als Emitterfolger dar, der durch eine Ansteuerschaltung, welche aus Transistoren Q1 und Q2 gebildet ist, geschaltet wird. Das Sendesignal U_{send} ist an die Basis des Transistors Q2 gelegt. Im Ruhezustand, d. h. ohne vorhandenen Sendeimpuls, ist der Transistor Q2 gesperrt und, da durch den Widerstand R5 kein Strom fließen kann, in der Folge auch der Transistor Q3. Da der Transistor Q2 gesperrt ist, kann im Basis-Emitter-Stromkreis des Transistors Q1 kein Strom fließen, er ist daher ebenfalls gesperrt, obwohl an der Basis des aus den Widerständen R1 und R2 gebildeten Widerstandsteilers über den Schutzwiderstand R3 eine Steuerspannung U_{b} anliegt. Der Transistor Q1 ist damit zum Öffnen vorbereitet. Bei Ausgabe eines Impulses U_{send} mit der Zeitdauer Δt = t₁ - t₀ von der (nicht dargestellten) Steuereinheit öffnet der Transistor Q2. Da jetzt im Basis-Emitter-Stromkreis des Transistors Q1 ein Strom fließt, öffnet der Transistor Q1 ebenfalls. Über den Widerstand R5 fließt jetzt Strom, der Sendetransistor Q3 öffnet und zieht die Busspannung Bus+ mit einem durch den Widerstand R6 vordefinierten Strom nach unten. Es entsteht ein Aktivimpuls am Bus.

Der Kondensator C1 dient zur negativen Rückkopplung des Wechselspannungsanteils des Bussignals. Der Kondensator überträgt die fallende Flanke bei t₀ als negative Spannung an den Widerstandsteiler R1, R2. Erreicht diese den Wert von -U_{b} plus der sich summierenden Spannungsabfälle an der Basis-Emitterstrecke des Transistors Q1 sowie der Emitter-Kollektor-Sättigungsspannung des Transistors Q2, so sperrt der Transistor Q1 und als Folge auch der Transistor Q3, so dass die Busspannung Bus+ nicht weiter abfallen kann. Durch ständiges Nachregeln mittels der negativen Rückkopplung durch den Kondensator C 1 bleibt die Spannung Uₐ über die gesamte Impulsdauer Δt = t₁ - t₀ konstant. Bei entsprechender Dimensionierung wird die Spannung U_{b} am Knoten C1, R1, R2 sozusagen durch die fallende Signalspannung am Bus überschrieben.

Dabei müssen die Werte der Widerstände R1, R2 und R3 einerseits möglich hoch sein, um die Buslinie nicht zu sehr zu belasten, andererseits aber auch niedrig genug, um im Moment eines Sendeimpulses U_{send} noch ein sicheres Öffnen des Transistors Q1 zu gewährleisten. Ebenso ist die gesamte Zeitkonstante des Rückkopplungszweiges derart zu dimensionieren, dass das Wechselspannungssignal über Δt = t₁ - t₀ vom Bus her gut übertragen wird. Diese Zeitkonstante wird festgelegt durch die Kapazität des Kondensators C1 und den Werten der parallel gesetzten Widerstände R1, R2 und R3. Diese zum Teil konträren Anforderungen können nur mit einem Kompromiss erfüllt werden. Dabei wird die Pulstiefe des Aktivimpulses durch U_{ref} und den Spannungsteiler R1, R2 festgelegt, zusätzlich zu den Spannungsabfällen an den jetzt aktiven Transistoren Q1 und Q2. Wird der Wert des Widerstandes R3 nicht zu hoch gewählt, kann der Spannungsabfall wegen des sehr niedrigen Basisstromes des Transistors Q1 vernachlässigt werden.

U_{ref} kann die Versorgungsspannung für angeschlossene Applikationen sein, oder auch die Zwischenspannung, die bei einer Spannungsversorgung für Busknoten erzeugt wird, wie es zum Beispiel in der WO 2011/085703 beschrieben ist. Die Referenzspannung U_{ref} kann direkt verwendet werden, wenn sie den erforderlichen Wert hat, um die gewünschte Pulstiefe zu erreichen. Sie kann auch von einer Zenerdiode oder einem Spannungsregler aufbereitet werden. Für diese Ausführungsformen kann der Widerstand R2 entfallen.

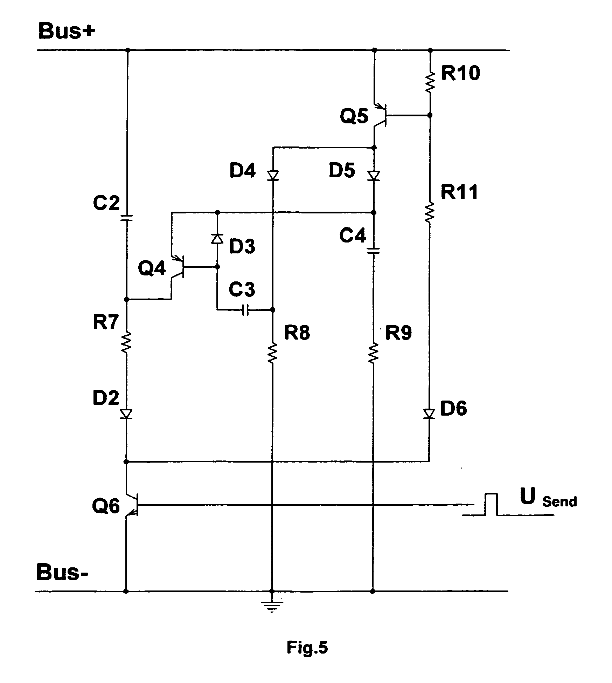

Figur 5 zeigt eine Schaltung zum Erzeugen des Ausgleichsimpulses. Im Ruhezustand, also ohne einen Sendeimpuls U_{send}, der an der Basis des Transistors Q6 wirkt, ist die Schaltung aufgrund des gesperrten Transistors Q6 und als Folge auch des gesperrten Transistors Q5 stromlos. Bei Ausgabe eines Impulses U_{send} der Zeitdauer Δt = t₁ - t₀ seitens der (nicht dargestellten) Steuereinheit öffnet der Transistor Q6. Der Kondensator C2 lädt über den Widerstand R7 und die Diode D2 auf die gerade vorhandene Busspannung Bus+, die während des Aktivimpulses herrscht, auf. Gleichzeitig fließt über den Widerstand R11 und durch die Diode D6 ein Basisstrom für den Transistor Q5, der nun ebenfalls öffnet. Über die Diode D5 und den Widerstand R9 lädt sich der Kondensator C4 ebenfalls auf die gerade vorhandene Busspannung auf. Die Kondensatoren C2 und C4 sind zu Beginn während des Aktivimpulses parallel geschaltet. Auch fließt ein Strom über die Diode D4 und durch den Widerstand R8, wenn jedoch der Widerstand R8 relativ hochohmig gewählt wird, ist dieser Strom vemachlässigbar und belastet den Bus nur wenig. Der Transistor Q4 ist gesperrt und, da die Kathoden der beiden Dioden D4 und D5 in etwa gleiches Potential haben, ist der Kondensator C3 praktisch entladen.

Zum Zeitpunkt t₁ endet das Sendesignal U_{send}, und der Transistor Q6 sperrt, so dass über den Widerstand R7 und die Diode D2 kein Strom mehr fließt. Als Folge wird auch der Transistor Q5 gesperrt. Die Dioden D4 und D5 sind gegenpolig angeordnet, so dass diese Strecke ebenfalls keinen Strom führt. Es fließt nun ein Strom von dem geladenen Kondensator C4 über die Kollektor-Basis-Strecke des Transistors Q4, den entladenen Kondensator C3 und den Widerstand R8. Der Transistor Q4 öffnet. Die beiden Kondensatoren C4 und C2 sind jetzt in Serie geschaltet. Ihre Gesamtspannung ist höher als die Busspannung Bus+, so dass nun ein relativ hoher Strom zum Bus hin fließt, der durch den Widerstand R9 begrenzt wird. Der Kondensator C3 wird jetzt über den Widerstand R8 stetig nachgeladen, bis der Transistor Q4 wieder sperrt. Durch eine entsprechende Dimensionierung des Kondensators C3 und des Widerstandes R8 und die dadurch erzeugte Zeitkonstante erhält man im Zusammenspiel mit dem Impedanzwandler des Busnetzteiles den definiert abklingenden Ausgleichsimpuls für das gemäß Figur 2 geforderte Verhalten.

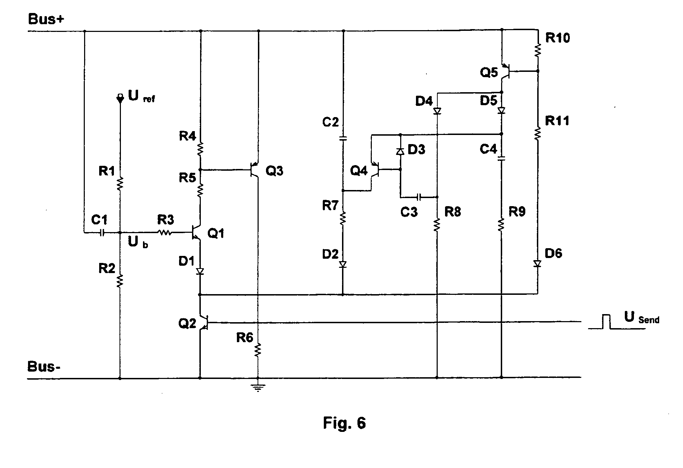

Figur 6 zeigt die Kombination der Schaltungen gemäß Figur 4 und Figur 5. Der Transistor Q2 übernimmt hier auch die Funktion des Transistors Q6 aus der Schaltung gemäß Figur 5, so dass der Sendeimpuls U_{send} sowohl an die Schaltung zum Erzeugen des Aktivimpulses als auch an die Schaltung zum Erzeugen des Ausgleichsimpulses gegeben wird. Eine Entkoppeldiode D1 ist vorgesehen, die die beiden Schaltungen funktionsmäßig voneinander trennt.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Sendestufe in einem Busknoten eines Busnetzes, insbesondere in einem Busknoten eines EIB-Netzes, der an eine Buslinie (Bus+, Bus-) gekoppelt ist, zum Erzeugen eines einem Sendesignal, das eine Folge von Sendeimpulsen aufweist, entsprechenden Bitsignals, das für jeden Sendeimpuls aus
einem Aktivimpuls, welcher eine Dauer Δt = t₁ - t₀, wobei t₀ den Beginn des Aktivimpulses und t₁ das Ende des Aktivimpulses angibt, und eine Pulstiefe Uₐ hat, und
einem sich an den Aktivimpuls anschließenden Ausgleichsimpuls
besteht, mit
- einer Schaltung (A) zum Erzeugen des Aktivimpulses;
- einer Schaltung (B) zum Erzeugen des Ausgleichsimpulses; und
- mindestens einer Steuerschaltung (C) zum Ausgeben des Sendesignals (U_{send}) zumindest an die Schaltung (A) zum Erzeugen des Aktivimpulses;
wobei die Pulstiefe (Uₐ) des Aktivimpulses durch eine vorgegebene Referenzspannung (U_{ref}) festgelegt ist, die von der Größe des Gleichspannungsanteils des Bitsignals unabhängig ist, wobei die Schaltung (A) zum Erzeugen des Aktivimpulses derart ausgestaltet is, dass sie die Pulstiefe (Uₐ) des Aktivimpulses durch negative Rückkopplung des Wechselspannungsanteils des Bitsignals konstant hält, **dadurch gekennzeichnet, dass** ein Kondensator (C1) zwischen den spannungstragenden Teil der Buslinie (Bus+) und einen Spannungsknoten (U_{b}) gelegt ist, wobei der Spannungsknoten (U_{b}) den Spannungsabgriff einer durch die Referenzspannung (U_{ref}) gespeisten Spannungsteilerschaltung (U_{ref}, R1, R2) bildet, der über einen Schutzwiderstand (R3) an die Basis eines Transistors (Q1) gelegt ist, welcher Teil einer Ansteuerschaltung (Q1, Q2) eines Sendetransistors (Q3) ist, wobei die Widerstände (R1, R2) der Spannungsteilerschaltung die Pulstiefe (Uₐ) festlegen und wobei die Kapazität des Kondensators (C1) und die Größen der Widerstände (R1, R2) der Spannungsteilerschaltung und des Schutzwiderstandes (R3) so abgestimmt sind, dass deren Zeitkonstante die Übertragung des Sendesignals während der Dauer (Δt) des Aktivpulses gewährleistet.

2. Sendestufe nach Anspruch 1, **dadurch gekennzeichnet, dass** die Referenzspannung (U_{ref}) eine von einer Spannungsversorgung des Busknotens bereitgestellte Versorgungsspannung ist.

3. Sendestufe nach Anspruch 1, **dadurch gekennzeichnet, dass** die Referenzspannung (U_{ref}) eine in einer Spannungsversorgung des Busknotens erzeugte Zwischenspannung ist.

4. Sendestufe nach Anspruch 1, **dadurch gekennzeichnet, dass** die Schaltung (B) zum Erzeugen des Ausgleichsimpulses mindestens zwei Energiespeicher (C2, C4) aufweist und derart ausgestaltet ist, dass sie
- zu Beginn (t₀) des Aktivimpulses die zwei Energiespeicher parallel schaltet, so dass diese sich während der Dauer (Δt) des Aktivimpulses auf die momentan vorliegende Busspannung aufladen; und
- am Ende (t₁) des Aktivimpulses die zwei Energiespeicher in Serie schaltet und die Gesamtspannung über den in Serie geschalteten Energiespeichern (C2, C4) auf den Bus aufschaltet.

5. Sendestufe nach Anspruch 1, **dadurch gekennzeichnet, dass** eine einzige Steuerschaltung (C) zur Ansteuerung sowohl der Schaltung (A) zum Erzeugen des Aktivimpulses als auch der Schaltung (B) zum Erzeugen des Ausgleichsimpulses vorgesehen ist.

6. Verwendung einer Sendestufe nach einem der Ansprüche 1 bis 5 in einer anwendungsspezifischen elektrischen Schaltung.

## Claims

1. A transmitting stage in a bus node of a bus network, in particular in a bus node of an EIB network, which bus node is coupled to a bus line (Bus+, Bus-), for producing a bit signal that corresponds to a transmission signal that has a series of transmission pulses, which bit signal comprises, for every transmission pulse,
an active pulse, which has a duration Δt = t₁ - to, wherein t0 indicates the beginning of the active pulse and t1 indicates the end of the active pulse, and which has a pulse depth Uₐ, and
an equalizer pulse following the active pulse, comprising
- a circuit (A) for producing the active pulse;
- a circuit (B) for producing the equalizer pulse; and
- at least one control circuit (C), which outputs the transmission signal (Uₜᵣₐₙₛ) at least to the circuit (A) to produce the active pulse;
wherein the pulse depth (Uₐ) of the active pulse is determined by a predefined reference voltage (U_{ref}), which is independent of the magnitude of the direct-voltage component of the bit signal, wherein the circuit (A) for producing the active pulse is configured to keep the pulse depth Uₐ) of the active pulse constant, by negative feedback of the alternating voltage component of the bit signal, **characterized in that** a capacitor (C1) is connected between the voltage carrying part of the bus line (Bus+) and a voltage node (U_{b}), the voltage node (U_{b}) being the voltage tap of a voltage division circuit (U_{ref}, R1, R2) fed by the reference voltage (U_{ref}) which voltage tap is connected to the base of a transistor (Q1) via a protective resistor (R3), the transistor being part of a driving circuit (Q1,Q2) of a transmitting transistor (Q3), the resistances (R1,R2) of the voltage determining circuit determining the pulse depth (Uₐ) and the capacity of the capacitor (C1) and the magnitudes of resistors (R1, R2) of the voltage division circuit and of protective resistor (R3) are adjusted so that a time constant thereof ensures transmission of the transmission signal during the duration (Δt) of the active pulse.

2. The transmission stage of claim 1, **characterized in that** the reference voltage (U_{ref}) is a supply voltage provided by the voltage supply of the bus node.

3. The transmission stage of claim 1, **characterized in that** the reference voltage (U_{ref}) is an intermediate voltage produced in the voltage supply of the bus node.

4. The transmission stage of claim 1, **characterized in that** the circuit (B) for producing the equalizer pulse comprises at least two energy storages (C2, C4) and is configured to
- parallel connecting the two energy storages at the beginning (t₀) of the active pulse, so that they charge to the actual bus voltage during the duration (Δt) of the active pulse; and
- at the end (t₁) of the active pulse serially connecting the two energy storages and supplying the total voltage to the bus via the serially connected energy storages (C2, C4).

5. The transmission stage of claim 1, **characterized in that** an individual control circuit (C) is provided for driving both the circuit (A) for producing the active pulse and the circuit (B) for producing the equalizer pulse.

6. Use of a transmission stage of any of claims 1 to 5 in an application specific integrated circuit.

## Revendications

1. Étage d'émission dans un noeud d'un réseau de bus, en particulier dans un noeud d'un réseau de bus EIB, couplé à une ligne de bus (bus+, bus-) afin de générer un signal binaire qui correspond à un signal d'émission contenant une séquence d'impulsions d'émission composée, pour chaque impulsion d'émission,
d'une impulsion active ayant une durée Δt = t₁ - t₀, où t₀ est le début et t₁ la fin de l'impulsion active, et une profondeur d'impulsion Uₐ, et
d'une impulsion de compensation consécutive à l'impulsion active,
ledit étage d'émission comprenant
- un circuit (A) servant à générer l'impulsion active;
- un circuit (B) servant à générer l'impulsion de compensation ; et
- au moins un circuit de commande (C) servant à délivrer le signal d'émission (U_{send}) au minimum au circuit (A) servant à générer l'impulsion active ;
dans lequel la profondeur (Uₐ) de l'impulsion active est fixée par une tension de référence (U_{réf}) prédéfinie indépendante de la grandeur de la composante continue du signal binaire, le circuit (A) servant à générer l'impulsion active est configuré de manière à maintenir constante la profondeur (Uₐ) de l'impulsion active par réinjection négative de la composante alternative du signal binaire, **caractérisé en ce qu'**un condensateur (C1) est relié entre la partie véhiculant la tension de la ligne de bus (bus+) et un noeud de tension (U_{b}), lequel noeud de tension (U_{b}) forme la prise de tension d'un circuit diviseur de tension (U_{réf}, R1, R2) alimenté par la tension de référence (U_{réf}), laquelle prise de tension est reliée par le biais d'une résistance de protection (R3) à la base d'un transistor (Q1) qui fait partie d'un circuit d'attaque (Q1, Q2) d'un transistor d'émission (Q3), les résistances (R1, R2) du circuit diviseur de tension déterminant la profondeur d'impulsion (Uₐ) et la capacité du condensateur (C1) et les valeurs des résistances (R1, R2) du circuit diviseur de tension et de la résistance de protection (R3) étant adaptées de telle sorte que leur constante de temps garantit la transmission du signal d'émission pendant la durée (Δt) de l'impulsion active.

2. Étage d'émission selon la revendication 1, **caractérisé en ce que** la tension de référence (U_{réf}) est une tension d'alimentation fournie par une source de tension du noeud de bus.

3. Étage d'émission selon la revendication 1, **caractérisé en ce que** la tension de référence (U_{réf}) est une tension intermédiaire générée dans une source de tension du noeud de bus.

4. Étage d'émission selon la revendication 1, **caractérisé en ce que** le circuit (B) servant à générer l'impulsion de compensation comporte au moins deux accumulateurs d'énergie (C2, C4) et est configuré de telle sorte que
- au début (t₀) de l'impulsion active, il relie les deux accumulateurs d'énergie en parallèle afin que ceux-ci se chargent à la tension de bus présente instantanément pendant la durée (Δt) de l'impulsion active ; et
- à la fin (t₁) de l'impulsion active, il relie les deux accumulateurs d'énergie en série et, par le biais des accumulateurs d'énergie (C2, C4) reliés en série, il applique la tension totale au bus.

5. Étage d'émission selon la revendication 1, **caractérisé en ce qu'**il est prévu un seul circuit de commande (C) pour attaquer à la fois le circuit (A) servant à générer l'impulsion active et le circuit (B) servant à générer l'impulsion de compensation.

6. Utilisation d'un étage d'émission selon l'une des revendications 1 à 5 dans un circuit électrique spécifique à une application.
